# EUROPÄISCHE PATENTSCHRIFT

(11) **EP 3 285 018 B1**
(45) Veröffentlichungstag und Bekanntmachung des Hinweises auf die Patenterteilung: **10.07.2019**
(21) Anmeldenummer: 16184849.4
(22) Anmeldetag: 19.08.2016
(51) Int. Cl.: F24F 11/30, F24F 110/00, F24F 110/40, F24F 11/62, F24F 11/74, G05D 7/06

(54) **VOLUMENSTROMREGLER**
VOLUME FLOW REGULATOR
RÉGULATEUR DE DÉBIT

(43) Veröffentlichungstag der Anmeldung: 21.02.2018
(73) Patentinhaber: Gruner AG, 78564 Wehingen (DE)
(72) Erfinder: Spreitzer, Wolfgang, 78564 Wehingen (DE)
(74) Vertreter: Kohler Schmid Möbus Patentanwälte

(56) Entgegenhaltungen:
- EP-A2- 1 950 508
- DE-U1-202004 010 819
- US-A1- 2009 240 376
- US-A1- 2015 324 104

## Beschreibung

Die vorliegende Erfindung betrifft einen Volumenstromregler, insbesondere für klima- und lüftungstechnische Anlagen, zum Verstellen einer Regelklappe, die im Inneren eines Strömungskanals schwenkbar gelagert ist, mit einem Differenzdrucksensor zum Messen eines im Strömungskanal herrschenden Differenzdrucks, mit einer Regeleinheit, die zum Einstellen eines Soll-Volumenstroms im Strömungskanal die Regelklappe in Abhängigkeit des vom Drucksensor gemessenen Drucks verstellt, mit einem ersten Bedienelement zum Auswählen eines von mehreren Parametern, insbesondere von Regel- und Konfigurationsparametern, und einem zweiten Bedienelement zum Einstellen des Wertes des jeweils ausgewählten Parameters, und mit einem Display zum Anzeigen des Wertes des jeweils ausgewählten Parameters.

Ein derartiger Volumenstromregler zum Einstellen eines Volumenstroms durch einen Strömungskanal in klima- und lüftungstechnischen Anlagen ist beispielsweise durch die EP 1 950 508 A2 bekannt geworden.

Solche Volumenstromregler sind ein wichtiges Element moderner Belüftungstechnik. Sie ermöglichen es, ganze Gebäude oder auch nur einzelne Räume mit definierten Luftmengen zu versorgen, indem sie die Luftströme der Raumluftversorgung messen, auswerten und regeln. Über einen Druckdifferenzsensor wird im Strömungskanal eine Druckdifferenz bestimmt und hieraus ein Istwert ermittelt. Dieser wird in einer Regeleinrichtung mit einem hinterlegten Sollwert verglichen. Im Falle einer Abweichung verstellt die Regeleinrichtung eine im Strömungskanal vorgesehene Regelklappe, um so den Volumenstrom zwischen einem minimal und einem maximal zulässigen Volumenstrom entsprechend einzustellen. Der Differenzdrucksensor kann dabei als dynamischer Strömungssensor oder als statischer Drucksensor ausgelegt werden. In beiden Fällen soll eine höhenunabhängige VAV Regelung möglich sein. Diese wird durch die gleichzeitige Verwendung eines weiteren Drucksensors zur Bestimmung des barometrischen Luftdrucks der Umgebung erreicht. Der Differenzdrucksensor liefert dann ein korrigiertes Signal proportional zur Luftgeschwindigkeit im Strömungskanal.

Der aus EP 1 950 508 A2 bekannte Volumenstromregler weist als erstes Bedienelement einen Drehschalter zum Auswählen eines von mehreren Regel- und/oder Konfigurationsparametern und als zweites Bedienelement einen Drehknopf zum Einstellen des Wertes des jeweils ausgewählten Parameters auf. Auf einem Display wird der aktuell eingestellte Wert des mit dem Drehschalter ausgewählten Parameters angezeigt. Durch Verstellen des Drehschalters (Parameterschalter) wird z.B. mithilfe einer außenseitig aufgebrachten Skala ein gewünschter Parameter ausgewählt, dessen Wert dann mit dem Drehknopf (Einstellpotentiometer oder Editschalter) verstellt wird.

Bei dem aus DE 20 2004 010 819 U1 bekannten Volumenstromregler sind zur Einstellung des minimal und maximal zulässigen Volumenstroms zwei Potentiometer vorgesehen. Durch eine außenseitig aufgebrachte Skalierung können der minimale und der maximale Volumenstrom über je ein Potentiometer problemlos eingestellt werden. Die Eingabe weiterer Reglerparameter (z.B. "maximaler Messbereich", normale oder inverse Drehrichtung der Regelklappe, etc.) und die Visualisierung der Stellantriebsdaten erfolgen mit einem separaten Bedienteil, das an den Volumenstromregler angeschlossen wird.

Bei dem aus US 5,161,100 bekannten Volumenstromregler sind zur Einstellung der Regelparameter eines PI-Reglers (Proportionalanteil, Integrationszeit) je ein Schalter vorgesehen. Weitere Funktionen sind die Auswahl von Konfigurationsparametern welche durch die zuvor genannten Schalter verändert werden können.

Demgegenüber ist es die Aufgabe der vorliegenden Erfindung, bei einem Volumenstrom- und Druckregler der eingangs genannten Art die Bedienung weiter zu vereinfachen.

Diese Aufgabe wird erfindungsgemäß dadurch gelöst, dass das erste Bedienelement ein Drucktaster, ein Touchschalter, ein Touchbedienfeld oder ein berührungsloses Bedienelement zum Weiterschalten des im Display jeweils angezeigten Parameters bzw. Parameterwertes ist, dass dem Display eine Skala mit den auswählbaren Parametern zugeordnet ist und dass im Display eine durch Betätigen des ersten Bedienelements entlang der Skala weiterschaltbare Markierung angezeigt ist, die auf der Skala den jeweils angezeigten Parameter anzeigt.

Erfindungsgemäß wird durch Drücken des Drucktasters, durch Berühren des Touchschalters oder -bedienfeldes oder berührungslos durch Wisch- und Streichgesten vor dem berührungslosen Bedienelement der im Display jeweils angezeigte Parameter bzw. Parameterwert weitergeschaltet. Ist der gewünschte Parameter ausgewählt, wird dessen Wert mit dem zweiten Bedienelement verstellt. Die Editierung erfolgt also durch Verstellen des zweiten Bedienelements aus seiner aktuellen Stellung. Für die verschiedenen Regel- und Konfigurationsparameter wird das Display zur Anzeige der Funktion und des aktuellen Wertes genutzt, so dass die Bedienelemente selbst keine auf der Gehäuseaußenseite aufgebrachte Skala benötigen.

### Regelparameter können beispielsweise sein:

- Vmin:: *minimal zulässiger Volumenstrom in* % *bezogen auf Vnom oder in Einheiten von I*/*s oder m3*/*h oder cfm*
- Vmax:: *maximal zulässiger Volumenstrom in* % *bezogen auf Vnom oder in Einheiten von l*/*s oder m3*/*h oder cfm*
- Vnom:: *maximaler Messbereich*/*OEM-spezifischer Wert, entsprechend dem verwendeten VAV-Boxtyp oder in Einheiten von l*/*s oder m3*/*h oder cfm*
- Mode:: *Betriebsart: 0...10V*/*2... 10V, normale oder inverse Drehrichtung der Regelklappe, Konfiguration optional vorhandener Sensoreingänge, etc.*
- Active Flow:: *aktueller Volumenstrom in % bezogen auf Vnom oder in Einheiten von l*/*s oder m3*/*h oder cfm.*

### Konfigurationsparameter können beispielsweise sein:

- Adr:: *Kommunikationsparameter wie z.B. Adresse, Geschwindigkeit, etc.*
- Test:: *Testfunktionen die unabhängig der externen Signale ausgeführt werden können, im besonderen Vmin, Vmax, ZU, AUF, etc.*

Vorteilhaft ist das zweite Bedienelement als ein endlos drehbarer Drehknopf (z.B. Inkrementalgeber) zum Einstellen des Wertes des jeweils angezeigten Parameters ausgebildet.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Es zeigt:
- Fig. 1: die Draufsicht des erfindungsgemäßen Volumenstromreglers; und
- Fig. 2: schematisch das Innenleben des Volumenstromreglers von Fig. 1.

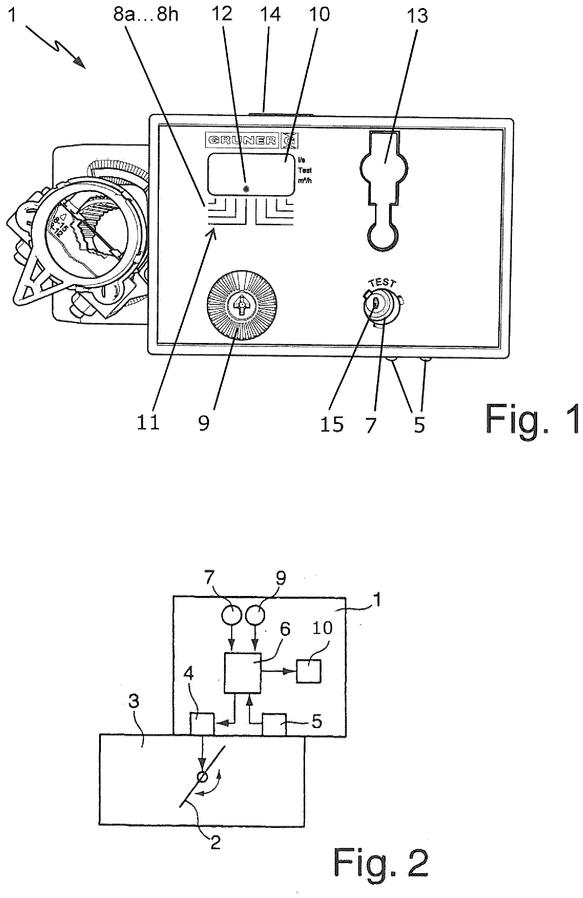

Der in **Fign. 1 und 2** gezeigte Volumenstromregler **1** dient zum Einstellen eines Volumenstroms in klima- und lüftungstechnischen Anlagen mittels einer Regelklappe **2,** die im Inneren eines Strömungskanals **3** schwenkbar gelagert ist.

Dazu umfasst der Volumenstromregler 1 einen Stellantrieb **4** zum Verschwenken der Regelklappe 2, einen Differenzdrucksensor **5** zum Messen eines im Strömungskanal 3 herrschenden Differenzdrucks, eine Regeleinheit **6,** die zum Einstellen eines in der Regeleinheit 6 hinterlegten Soll-Differenzdrucks, d.h. eines Soll-Volumenstroms, den Stellantrieb 4 in Abhängigkeit des vom Differenzdrucksensor 5 gemessenen Drucks im Strömungskanal 3 verstellt.

Weiterhin weist der Volumenstromregler 1 ein ersten Bedienelement (Parameterschalter) **7** zum Auswählen eines von mehreren Regel- und/oder Konfigurationsparametern **8a-8h** der Regeleinheit 6 und ein zweites Bedienelement **9** zum Einstellen des Wertes des jeweils ausgewählten Parameters, sowie ein Display **10** zum Anzeigen des aktuell eingestellten Wertes des jeweils ausgewählten Parameters auf. Das Display weist eine Hintergrundbeleuchtung auf, um die Ablesbarkeit in dunklen Umgebungen deutlich zu verbessern. Dazu kann der Kontrast und die Helligkeit optional eingestellt werden.

Das erste Bedienelement 7 dient zum Weiterschalten des im Display 10 jeweils angezeigten Parameters bzw. dessen Parameterwertes und kann beispielsweise als ein selbst zurückstellender Drucktaster, wie in Fig. 2 gezeigt, oder als ein Touchschalter oder Touchbedienfeld ausgebildet sein. Das zweite Bedienelement 9 kann, wie in Fig. 2 gezeigt, als ein endlos drehbarer Drehknopf (Einstellpotentiometer oder Editschalter) zum Einstellen des Wertes des jeweils angezeigten Parameters ausgebildet sein. Alternativ können diese Bedienelemente 7, 9 auch vollständig berührungslos ausgeführt sein, um den im Display 10 jeweils angezeigten Parameter berührungslos, z.B. durch Wisch- und Streichgesten, weiterzuschalten bzw. den Parameterwert einzustellen.

Neben dem Display 10 befindet sich eine Skala **11** mit den auswählbaren Parametern 8a-8h. Im Display 10 wird eine Markierung **12,** hier lediglich beispielhaft ein Punkt, angezeigt, der durch Betätigen des ersten Bedienelements 7 entlang der Skala 11 weitergeschaltet wird und dabei auf der Skala 11 den jeweils angezeigten Parameter anzeigt. Im gezeigten Ausführungsbeispiel weist die Skala mindestens die Regelparameter Vₘᵢₙ, Vₘₐₓ, Vₙₒₘ, Mode, Active Flow und die Konfigurationsparameter Ard, Test auf.

Durch erstmaliges Drücken des Drucktasters 7 wird im Display 10 der Punkt 12 angezeigt bzw. durch erneutes Drücken weitergeschaltet. Der jeweils ausgewählte Parameter 8a-8h wird mithilfe des Punkts 12 an der Skala 11 angezeigt. Ist der gewünschte Parameter ausgewählt, wird dessen Wert durch Verdrehen des Drehknopfes 9 verstellt. Die Werteübernahme in die Regeleinheit 6 erfolgt durch Weiterschalten zu einem neuen Parameter innerhalb von 10 s. Erfolgt keine Werteübernahme, wird nach 10 s wieder der aktuell gültige Parameterwert im Display 10 angezeigt.

Weiterhin sind eine Diagnosebuchse **13** zur Programmierung der Regeleinheit 6, auch bei nicht-spannungsversorgtem Volumenstromregler 1, vorhanden. Eine Getriebeausrückung **14** erlaubt die Handverstellung der Klappenposition und deaktiviert die Regelschleife. Eine Leuchtdiode **15** vermittelt den aktuellen Zustand der Regeleinheit 6, z.B. Spannungsversorgung vorhanden, Ist-Wert = Soll-Wert, etc.

## Patentansprüche

1. Volumenstromregler (1), insbesondere für klima- und lüftungstechnische Anlagen, zum Verstellen einer Regelklappe (2), die im Inneren eines Strömungskanals (3) verstellbar gelagert ist,
mit einem Differenzdrucksensor (5) zum Messen eines im Strömungskanal (3) herrschenden Differenzdrucks,
mit einer Regeleinheit (6), die zum Einstellen eines Soll-Volumenstroms im Strömungskanal (3) die Regelklappe (2) in Abhängigkeit des vom Drucksensor (5) gemessenen Drucks verstellt,
mit einem ersten Bedienelement (7) zum Auswählen eines von mehreren Parametern (8a-8h), insbesondere von Regel- und/oder Konfigurationsparametern, und einem zweiten Bedienelement (9) zum Einstellen des Wertes des jeweils ausgewählten Parameters, und
mit einem Display (10) zum Anzeigen des aktuell eingestellten Wertes des jeweils ausgewählten Parameters,
**dadurch gekennzeichnet,**
**dass** das erste Bedienelement (7) ein Drucktaster, ein Touchschalter, ein Touchbedienfeld oder ein berührungsloses Bedienelement zum Weiterschalten des im Display (10) jeweils angezeigten Parameters ist, dass dem Display (10) eine Skala (11) mit den auswählbaren Parametern (8a-8h) zugeordnet ist und dass im Display (10) eine durch Betätigen des ersten Bedienelements (7) entlang der Skala (11) weiterschaltbare Markierung (12) angezeigt ist, die auf der Skala (11) den jeweils angezeigten Parameter anzeigt.

2. Volumenstromregler nach Anspruch 1, **dadurch gekennzeichnet, dass** die Parameter (8a-8h) "minimal zulässiger Volumenstrom" und/oder "maximal zulässiger Volumenstrom" und/oder "maximaler Messbereich" und/oder "Betriebsartmodus" und/oder "Active Flow" und/oder "Betriebsart" und/oder "Kommunikationsparameter" und/oder "Testfunktion" und/oder "Konfiguration" sind.

3. Volumenstromregler nach einem der vorhergehenden Ansprüche, **dadurch gekennzeichnet, dass** das zweite Bedienelement (9) als ein endlos drehbarer Drehknopf zum Einstellen des Wertes des jeweils angezeigten Parameters ausgebildet ist.

4. Volumenstromregler nach einem der vorhergehenden Ansprüche, **dadurch gekennzeichnet, dass** der Volumenstromregler (1) einen Stellantrieb (4) zum Verschwenken der Regelklappe (2) aufweist.

## Claims

1. A volumetric flow controller (1), in particular for air conditioning and ventilation systems, for displacing a control flap (2) that is adjustably supported in the interior of a flow channel (3), comprising
a differential pressure sensor (5) for measuring a pressure difference prevailing in the flow channel (3),
a control unit (6) that adjusts the control flap (2) depending on the pressure measured by the pressure sensor (5) for adjusting a target volumetric flow in the flow channel (3),
a first operating element (7) for selecting one of a plurality of parameters (8a-8h), in particular of control and/or configuration parameters, and a second operating element (9) for adjusting the value of the respective selected parameter, and
a display (10) for displaying the currently set value of the respective selected parameter,
**characterized in that** the first operating element (7) is a push button, a touch-sensitive switch, a touch-sensitive operating panel or a contactless operating element for advancing the respective parameter displayed in the display (10), that a scale (11) with the selectable parameters (8a-8h) is associated with the display (10) and that a marking (12) that can be advanced along the scale (11) by actuation of the first operating element (7) and that indicates the respective displayed parameter on the scale (11) is displayed in the display (10).

2. The volumetric flow controller as claimed in claim 1, **characterized in that** the parameters (8a-8h) are "minimum permissible volumetric flow" and/or "maximum permissible volumetric flow" and/or "maximum measurement range" and/or "operating type mode" and/or "active flow" and/or "operating type" and/or "communications parameter" and/or "test function" and/or "configuration".

3. The volumetric flow controller as claimed in any one of the preceding claims, **characterized in that** the second operating element (9) is implemented as a continuously rotatable rotary knob for adjusting the value of the respective displayed parameter.

4. The volumetric flow controller as claimed in any one of the preceding claims, **characterized in that** the volumetric flow controller (1) comprises an actuating drive (4) for pivoting the control flap (2).

## Revendications

1. Régulateur de débit volumique (1), en particulier pour des installations de climatisation et de ventilation, servant à régler un volet de régulation (2) monté de manière réglable à l'intérieur d'un canal d'écoulement (3),
comportant un capteur de pression différentielle (5) pour mesurer une pression différentielle régnant dans le canal d'écoulement (3),
comportant une unité de régulation (6) qui déplace le volet de régulation (2) en fonction de la pression mesurée par le capteur de pression (5) pour régler un débit volumique de consigne dans le canal d'écoulement (3),
comportant un premier élément de commande (7) pour sélectionner un paramètre parmi plusieurs paramètres (8a-8h), en particulier des paramètres de régulation et/ou de configuration, et un second élément de commande (9) pour régler la valeur du paramètre respectivement sélectionné, et
comportant un afficheur (10) pour afficher la valeur actuellement réglée du paramètre respectivement sélectionné,
**caractérisé en ce**
**que** le premier élément de commande (7) est un bouton-poussoir, un commutateur tactile, un panneau de commande tactile ou un élément de commande sans contact pour faire avancer le paramètre respectivement affiché sur l'afficheur (10), qu'une échelle (11) avec les paramètres (8a-8h) sélectionnables est associée à l'afficheur (10) et qu'un repère (12) qui indique le paramètre respectivement affiché et que l'on peut faire avancer le long de l'échelle (11) en actionnant le premier élément de commande (7) est affiché sur l'afficheur (10).

2. Régulateur de débit volumique selon la revendication 1, **caractérisé en ce que** les paramètres (8a-8h) sont « Débit volumique minimal admissible » et/ou « Débit volumique maximal admissible » et/ou « Plage de mesure maximale » et/ou « Mode de type de fonctionnement » et/ou « Active Flow » et/ou « Type de fonctionnement » et/ou « Paramètres de communication » et/ou « Fonction de test » et/ou « Configuration ».

3. Régulateur de débit volumique selon l'une des revendications précédentes, **caractérisé en ce que** le deuxième élément de commande (9) est réalisé sous la forme d'un bouton rotatif tournant sans fin pour régler la valeur du paramètre respectivement affiché.

4. Régulateur de débit volumique selon l'une des revendications précédentes, **caractérisé en ce que** le régulateur de débit volumique (1) présente un actionneur (4) pour faire pivoter le volet de régulation (2).
